# EUROPÄISCHE PATENTSCHRIFT

(11) **EP 0 326 820 B1**
(45) Veröffentlichungstag und Bekanntmachung des Hinweises auf die Patenterteilung: **17.08.1994**
(21) Anmeldenummer: 89100399.8
(22) Anmeldetag: 11.01.1989
(51) Int. Cl.: F21M 7/00

(54) **Scheinwerfer für Fahrzeuge, insbesondere Kraftfahrzeuge**
Headlamp for vehicles, particularly motor vehicles
Projecteur pour véhicules, en particulier automobiles

(30) Priorität: 04.02.1988 DE 8801371 U
(43) Veröffentlichungstag der Anmeldung: 09.08.1989
(73) Patentinhaber: ROBERT BOSCH GMBH, 70442 Stuttgart (DE)
(72) Erfinder: Dümeland, Michael, Dr.Ing., D-7410 Reutlingen 11 (DE)

(56) Entgegenhaltungen:
- DE-A- 2 913 045
- DE-B- 1 029 928
- DE-U- 8 714 177
- US-A- 3 382 354
- US-A- 4 556 931

## Beschreibung

Die Erfindung betrifft einen Scheinwerfer für Fahrzeuge, insbesondere Kraftfahrzeuge, nach der Gattung des Patentanspruchs 1.

Ein solcher Scheinwerfer ist durch die DE-U 87 14 177 bekannt. Dieser Scheinwerfer weist ein Scheinwerfergehäuse auf, das zum Einbau in eine Scheinwerferaufnahmeöffnung einer Fahrzeugkarosserie vorgesehen ist. Die Lichtaustrittsöffnung des Scheinwerfergehäuses ist mit einer Abdeckscheibe verschlossen, an deren Rand ein elastisches Dichtelement als Spritzteil angespritzt ist. Die Abdeckscheibe liegt über das Dichtelement an der Stirnseite des Scheinwerfergehäuses an und ist am Scheinwerfergehäuse durch separate Befestigungselemente befestigt. Diese separaten Befestigungselemente sind sowohl von deren Fertigung als auch von deren Montage her aufwendig.

Durch die DE-B 1 029 928 ist außerdem eine Leuchte bekannt, welche ein Gehäuse, eine die Lichtaustrittsöffnung des Gehäuses abdeckende Abdeckscheibe und einen über der Abdeckscheibe angeordneten Schutzkorb aufweist. Am Schutzkorb sind Befestigungselemente in Form von Laschen angeordnet, über die der Schutzkorb und die Abdeckscheibe am Leuchtengehäuse befestigt sind. Die Abdeckscheibe kann aus Kunststoff bestehen, wobei dann der Schutzkorb und die Befestigungselemente einstückig mit dieser ausgebildet sind. Die Abdeckscheibe muß dabei jedoch aus einem formstabilen Kunststoff bestehen, da sonst keine sichere Befestigung möglich ist. Eine Abdichtung des Leuchtengehäuses kann durch die Abdeckscheibe wegen derer infolge der erforderlichen Formstabilität geringen Elastizität nicht erreicht werden.

Der erfindungsgemäße Scheinwerfer mit den Merkmalen des Patentanspruchs 1 hat demgegenüber den Vorteil, daß durch die Anformung des Dichtelements in einem Arbeitsgang zugleich an der Abdeckscheibe und am Befestigungselement die Herstellung und Montage des Scheinwerfers wesentlich vereinfacht ist. Durch das elastische Dichtelement ist dabei eine sichere Abdichtung des Scheinwerfergehäuses und durch das Befestigungselement eine sichere Befestigung der Abdeckscheibe am Scheinwerfergehäuse erreicht.

Vorteilhafte Ausbildungen und Weiterbildungen der Erfindung sind in den abhängigen Patentansprüchen angegeben. Durch die Weiterbildung gemäß Patentanspruch 2 wird in vorteilhafter Weise mit dem Einsetzen des Scheinwerfers in die Scheinwerferaufnahmeöffnung diese verschlossen. Durch die Ausbildung gemäß Patentanspruch 3 wird ein gesicherter Anpreßdruck zwischen dem Dichtelement und dem Scheinwerfergehäuse erreicht. Eine Lagesicherung der Abdeckscheibe und eine Abdichtung quer zur Stirnseite des Scheinwerfergehäuses wird mit den Merkmalen gemäß Patentanspruch 4 erreicht.

### Zeichnung

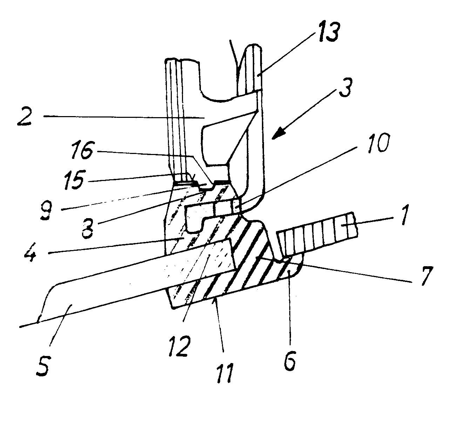

Ein Ausführungsbeispiel der Erfindung ist in der Zeichnung dargestellt und in der Figurenbeschreibung näher erläutert. Die einzige Figur zeigt den Vertikalschnitt durch eine Dichtung, in die ein Befestigungselement und ein Scheinwerferglas eingeformt sind.

### Beschreibung des Ausführungsbeispieles

Beim erfindungsgemäßen Scheinwerfer ist ein Dichtelement 4 vorgesehen, das nachfolgend als Dichtung bezeichnet wird, welches zwischen einem Scheinwerfergehäuse 2 und einer Abdeck- oder Streuscheibe 5, die aus Glas oder Kunststoff bestehen kann, angeordnet ist. Die Dichtung 4 ist parallel zur Stirnseite 16 des Scheinwerfergehäuses 2 angeordnet, wobei die Stirnseite 16 des Scheinwerfergehäuses 2 umlaufende, zur Scheinwerferinnen- und -außenseite weisende Flächen 15 aufweist, an die der der Stirnseite 16 des Scheinwerfergehäuses 2 zugeordnete Teil der Dichtung 4 angepaßt ist. In die Dichtung 4 ist der kurze Schenkel 10 eines Befestigungselementes 3, der gleichfalls weitgehend parallel zur Stirnseite 16 des Scheinwerfergehäuses 2 verläuft, eingeformt. Das Befestigungselement 3 besteht auch noch aus einem außerhalb der Dichtung 4 liegenden Teil, einem langen Schenkel 13, der etwa rechtwinklig zum kurzen Schenkel 10 verläuft, wobei der lange Schenkel 13 eine Rastfläche aufweist, die in eine an der Außenseite des Scheinwerfergehäuses 2 vorgesehene Rastfläche einrastbar ist. Die Befestigung der Dichtung 4 am Scheinwerfergehäuse 2 kann mit Hilfe des Befestigungselements 3 mittels Clipsen, Festklammern, Schraubringen, Bajonettring oder dergleichen erfolgen. Im übrigen kann die Befestigung der Dichtung 4 am Scheinwerfergehäuse 2 auch dadurch erfolgen, daß in die Dichtung 4 als Befestigungselement Gewindebuchsen eingeformt werden, an deren Stirnseiten Verbindungselemente des Scheinwerfergehäuses 2 anliegen und diese Verbindungselemente durch Schrauben mit den Gewindebuchsen verbunden werden. Das Befestigungselement kann ferner aus einzelnen Befestigungswinkelteilen 3 bestehen oder aus einem Rahmen mit darauf angeordneten Befestigungswinkelteilen 3 aufgebaut sein oder als ein umlaufender Rahmen mit nach innen weisendem Rand ausgebildet sein, der den kurzen Schenkel 10 des Befestigungselements darstellt. Der kurze Schenkel 10 des Befestigungselements 3 ist zwischen Stirnseite 16 des Scheinwerfergehäuses 2 und einem Rand 12 der Abdeckscheibe 5 angeordnet. Diese Einformung des kurzen Schenkels 10 des Befestigungselements 3 hat den Vorteil, daß bei Druck auf die Außenseite 11 der Dichtung 4 diese durch den kurzen Schenkel 10 eine erhöhte Stabilität erhält. Neben dieser Stabilitätsverbesserung wird durch die erfindungsgemäße Einformung des kurzen Schenkels 10 erreicht, daß der Formschluß zwischen Dichtung 4 und Scheinwerfergehäuse 2 zuverlässig hergestellt ist.

Im wesentlichen parallel zur Stirnseite 16 des Scheinwerfergehäuses 2 und parallel zum, von der Dichtung 4 umschlossenen kurzen Schenkel 10 des Befestigungselements 3 ist der Rand 12 der Abdeckscheibe 5 eingeformt.

Dieser Rand 12 der Abdeckscheibe 5 ist so in die Dichtung 4 eingeformt, daß die Abdeckscheibe 5 in einer Ebene zu der in der Karosserie 1 gebildeten Scheinwerferaufnahmeöffnung liegt. Die Fertigungstoleranzen der Scheinwerferaufnahmeöffnung führen dazu, daß ein Spalt 7 zwischen dem Rand 12 der Abdeckscheibe 5 und der Karosserie 1 bleibt. Dieser Spalt 7 wird durch eine in Richtung Karosserie 1 abstehende Dichtlippe 6 der Dichtung 4 im Einbauzustand verschlossen. Das Abdichten des Spalts 7 durch die Dichtlippe 6 kann dadurch erfolgen, daß die Dichtlippe 6 auf dem Richtung Fahrbahn weisenden Rand der Karosserie-Scheinwerferaufnahmeöffnung aufliegt. In alternativer Ausführung könnte die Dichtlippe 6 auch an dem Randbereich der radialen Ausnehmung der Karosserie-Scheinwerferaufnahmeöffnung anliegen.

Damit die Zuordnung zwischen dem in der Dichtung 4 entstehenden Rand 12 der Abdeckscheibe 5 und dem Befestigungselement 3 zum Scheinwerfergehäuse stimmt, wird eine Form benutzt. In diese Form werden der Rand 12 der Abdeckscheibe 5 und die Befestigungselemente 3 entsprechend ihrer Zuordnung zum Gehäuse 2 eingebracht. Die Form, in die Kunststoff, insbesondere aus Polyuretan, eingespritzt wird, hat eine solche Kontur, daß am Umfang der Dichtung 4 die vorstehende Dichtlippe 6 eingeformt wird. Angeformt an die Dichtung 4 werden auch umlaufende, zum Scheinwerfergehäuse 2 weisende Flächen. Diese Flächen bestehen aus einer nutförmigen Vertiefung 8, die mit entsprechenden ausgebildeten Flächen 15 am Scheinwerfergehäuse 2 korrespondieren und eine Art Nut-Feder-Verbindung herstellen. Nach dem Einformvorgang sind auch die Befestigungselemente 3 fest in der Dichtung 4 verankert. Die Form kann sowohl an unterschiedliche Scheinwerferformen als auch an veränderte Dichtungsformen und veränderte abdichtende Flächen zwischen Scheinwerfergehäuse 2 und Dichtung 4 angepaßt werden.

Nach dem Herausnehmen aus der Form ist die Dichtung 4 als Spritzteil am Rand 12 der Abdeckscheibe 5 angespritzt und umschließt zugleich einen Teil eines Befestigungselements 3, durch das das Spritzteil und die Abdeckscheibe 5 mit dem Scheinwerfergehäuse 2 verbindbar ist. Dieses Spritzteil erlaubt eine einfache Montage, insbesondere eine einfache Verbindung zwischen Abdeckscheibe 5 und Scheinwerfergehäuse 2 und eine gleichzeitige Abdichtung zwischen Abdeckscheibe 5, Scheinwerfergehäuse 2 und Karosserie 1 sowie die Befestigung der Abdeckscheibe 5 am Scheinwerfergehäuse 2.

## Patentansprüche

1. Scheinwerfer für Fahrzeuge, insbesondere Kraftfahrzeuge, mit einem in einer Scheinwerferaufnahmeöffnung einer Fahrzeugkarosserie befestigten Scheinwerfergehäuse (2), mit einer die Lichtaustrittsöffnung des Scheinwerfergehäuses (2) abdeckenden Abdeckscheibe (5), an deren Rand (12) ein elastisches Dichtelement (4) als Spritzteil angespritzt ist, über das die Abdeckscheibe (5) an der Stirnseite (16) des Scheinwerfergehäuses (2) anliegt, und mit Befestigungselementen (3) zur Befestigung der Abdeckscheibe (5) am Scheinwerfergehäuse (2), dadurch gekennzeichnet, daß das Dichtelement (4) gleichzeitig mit dem Anspritzen an den Rand (12) der Abdeckscheibe (5) an einen Teil (10) des Befestigungselements (3) angespritzt ist und diesen umschließt, wobei der außerhalb des Dichtelements (4) angeordnete Teil (13) des Befestigungselements (3) am Scheinwerfergehäuse (2) befestigt ist.

2. Scheinwerfer nach Anspruch 1, dadurch gekennzeichnet, daß das Dichtelement (4) eine in Richtung Karosserie (1) abstehende Dichtlippe (6) aufweist, durch die die Scheinwerferaufnahmeöffnung im Einbauzustand des Scheinwerfers verschließbar ist.

3. Scheinwerfer nach Anspruch 1 oder 2, dadurch gekennzeichnet, daß der vom Dichtelement (4) umschlossene Teil (10) des Befestigungselements (3) im wesentlichen parallel zur Stirnseite des Scheinwerfergehäuses (2) verläuft und daß der außerhalb des Dichtelements (3) angeordnete Teil (13) des Befestigungselements (3) Flächen aufweist, über die es in Richtung Stirnseite des Scheinwerfergehäuses (2) spann- und fixierbar ist.

4. Scheinwerfer nach einem der Ansprüche 1 bis 3, dadurch gekennzeichnet, daß die Stirnseite (16) des Scheinwerfergehäuses (2) umlaufende, zur Scheinwerferinnen- und -außenseite weisende Flächen (15) aufweist, an die der an der Stirnseite (16) anliegende Teil (8) des Dichtelements (4) angepaßt ist.

5. Scheinwerfer nach einem der vorstehenden Ansprüche, dadurch gekennzeichnet, daß der Rand (12) der Abdeckscheibe (5) sich parallel zur Stirnseite (16) des Scheinwerfergehäuses (2) und im wesentlichen parallel zum vom Dichtelement (4) umschlossenen Teil (10) des Befestigungselements (3) erstreckt, welcher zwischen der Stirnseite (16) des Scheinwerfergehäuses (2) und dem Rand (12) der Abdeckscheibe (5) angeordnet ist.

6. Scheinwerfer nach Anspruch 3, dadurch gekennzeichnet, daß der außerhalb des Dichtelements (4) angeordnete Teil des Befestigungselements (3) einen Schenkel (13) mit einer Rastfläche aufweist, die in eine an der Außenseite des Scheinwerfergehäuses (2) vorgesehene Rastfläche einrastbar ist.

## Claims

1. Headlamp for vehicles, in particular motor vehicles, having a headlamp casing (2) fastened in a headlamp-receiving opening in a vehicle bodywork, having a cover plate (5) which covers the light-discharge opening in the headlamp casing (2) and onto whose edge (12) there is injected as an injection-moulded part an elastic sealing element (4), by means of which the cover plate (5) bears against the front side (16) of the headlamp casing (2), and having fastening elements (3) for fastening the cover plate (5) to the headlamp casing (2), characterized in that the sealing element (4), whilst being at the same time injected onto the edge (12) of the cover plate (5), is also injected onto a part (10) of the fastening element (3) and encloses this part, that part (13) of the fastening element (3) disposed outside the sealing element (4) being fastened to the headlamp casing (2).

2. Headlamp according to Claim 1, characterized in that the sealing element (4) exhibits a sealing lip (6) which protrudes in the direction of the bodywork (1) and by which the headlamp-receiving opening can be sealed off when the headlamp is in the installed state.

3. Headlamp according to Claim 1 or 2, characterized in that that part (10) of the fastening element (3) which is enclosed by the sealing element (4) runs essentially parallel to the front side of the headlamp casing (2) and in that that part (13) of the fastening element (3) disposed outside the sealing element (3) exhibits faces by means of which the said fastening element can be clamped and fixed in the direction of the front side of the headlamp casing (2).

4. Headlamp according to one of Claims 1 to 3, characterized in that the front side (16) of the headlamp casing (2) exhibits circumferential faces (15) which point towards the inner and outer side of the headlamp and to which that part (8) of the sealing element (4) which bears against the front side (16) is matched.

5. Headlamp according to one of the preceding claims, characterized in that the edge (12) of the cover plate (5) extends parallel to the front side (16) of the headlamp casing (2) and essentially parallel to that part (10) of the fastening element (3) enclosed by the sealing element (4), which part is disposed between the front side (16) of the headlamp casing (2) and the edge (12) of the cover plate (5).

6. Headlamp according to Claim 3, characterized in that that part of the fastening element (3) disposed outside the sealing element (4) exhibits a leg (13) having a latch face which can be engaged in a latch face provided on the outer side of the headlamp casing (2).

## Revendications

1. Projecteur d'éclairage pour véhicules, en particulier automobiles, comprenant un boîtier (2) fixé dans une ouverture de la carrosserie du véhicule, une glace (5) recouvrant l'ouverture du boîtier servant de passage à la lumière et sur le bord (12) de laquelle est moulé un joint élastique (4) moulé lui-même par injection et qui sert à la glace (5) d'appui sur la face frontale (16) du boîtier (2) et enfin des organes (3) de fixation de la glace (5) sur le boîtier (2), caractérisé en ce que le joint (4) est moulé par injection à la fois et simultanément sur le bord (12) de la glace (5) et sur une partie (10) d'un organe de fixation qu'il vient englober, l'autre partie (13) de l'organe de fixation (3) à savoir celle qui se trouve à l'extérieur du joint (4) étant fixée au boîtier (2) du projecteur.

2. Projecteur selon la revendication 1, caractérisé en ce que le joint (4) comporte une lèvre d'étanchéité (6) débordant en direction de la carrosserie (1) et qui permet d'obturer l'ouverture de la carrosserie lorsque celle-ci est occupée par le projecteur.

3. Projecteur selon la revendication 1 ou 2, caractérisé en ce que la partie (10) de l'organe de fixation (3) englobée dans le joint (4) est sensiblement parallèle à la face frontale du boîtier (2) tandis que l'autre partie (13) de cet organe (3) extérieure au joint (3) présente des portées permettant de la mettre en tension en direction de la face frontale du boîtier (2) et de la fixer .

4. Projecteur selon l'une des revendications 1 à 3, caractérisé en ce que la face frontale (16) du boîtier (2) présente, vers l'intérieur et vers l'extérieur du projecteur, des portées périphériques (15) auxquelles est adaptée la partie (8) du joint (4) en appui sur la face frontale (16).

5. Projeteur selon l'une des revendications précédentes, caractérisé en ce que le bord (12) de la glace (5) est parallèle à la face frontale (16) du boîtier du projecteur (2) et sensiblement parallèle à la partie (10) de l'organe de fixation (3) incluse dans le joint (4) et située entre la face frontale (16) du boîtier (2) et le bord (12) de la glace (5).

6. Projecteur selon la revendication 3, caractérisé en ce que la partie de l'organe de fixation (3) située à l'extérieur du joint (4) comporte une branche (13) équipée d'une portée d'arrêt qui peut venir se bloquer sur une portée d'arrêt correspondante placée sur la face externe du boîtier (2) du projecteur.
